# FASCICULE DE BREVET EUROPEEN

(11) **EP 1 145 952 B1**
(45) Date de publication et mention de la délivrance du brevet: **21.12.2005**
(21) Numéro de dépôt: 01400945.0
(22) Date de dépôt: 12.04.2001
(51) Int. Cl.: B64C 1/24, B64D 43/02, G01P 5/14, B64C 1/14, G01P 13/02

(54) **Prise de pression et son montage sur un panneau du fuselage d'aéronef**
Drucksensor und sein Einbau an Flugzeugrumpfplatten
Pressure sensor and its assembly on an aircraft fuselage panel

(30) Priorité: 14.04.2000 FR 0004831
(43) Date de publication de la demande: 17.10.2001
(73) Titulaire: AIRBUS France, 31060 Toulouse (FR)
(72) Inventeur: Bourgon, Jean-Marc, 25330 Amancey (FR); Bayonne, Serge, 31480 Cadours (FR); Chauveau, Bruno, 31400 Toulouse (FR)
(74) Mandataire: Poulin, Gérard

(56) Documents cités:
- GB-A- 2 274 170
- US-A- 5 616 861

## Description

### Domaine technique

L'invention concerne un dispositif de prise de pression prévu pour être implanté sur un fuselage d'aéronef.

L'invention concerne également un procédé d'implantation d'un tel dispositif de prise de pression sur un panneau de fuselage d'un aéronef.

### Etat de la technique

Les aéronefs et notamment les avions sont équipés de différentes sondes conçues pour mesurer un certain nombre de paramètres. Ces paramètres sont ensuite transmis à des équipements, de façon à assurer un bon fonctionnement de l'aéronef et des instruments. Ainsi, certaines sondes, localisées à proximité du réacteur, fournissent des informations permettant de suivre le comportement du moteur (température d'éjection des gaz, régime, etc.). D'autres sondes, installées sur le fuselage, délivrent des informations concernant l'environnement dans lequel évolue l'aéronef (température, pression, etc.).

Parmi les sondes installées sur le fuselage de l'aéronef, on trouve des sondes de mesure de pression statique. L'information délivrée par ces sondes permet de calculer l'altitude à laquelle se trouve l'aéronef.

Une telle sonde, installée sur le fuselage d'un aéronef, est connue de US-A-5 616 861.

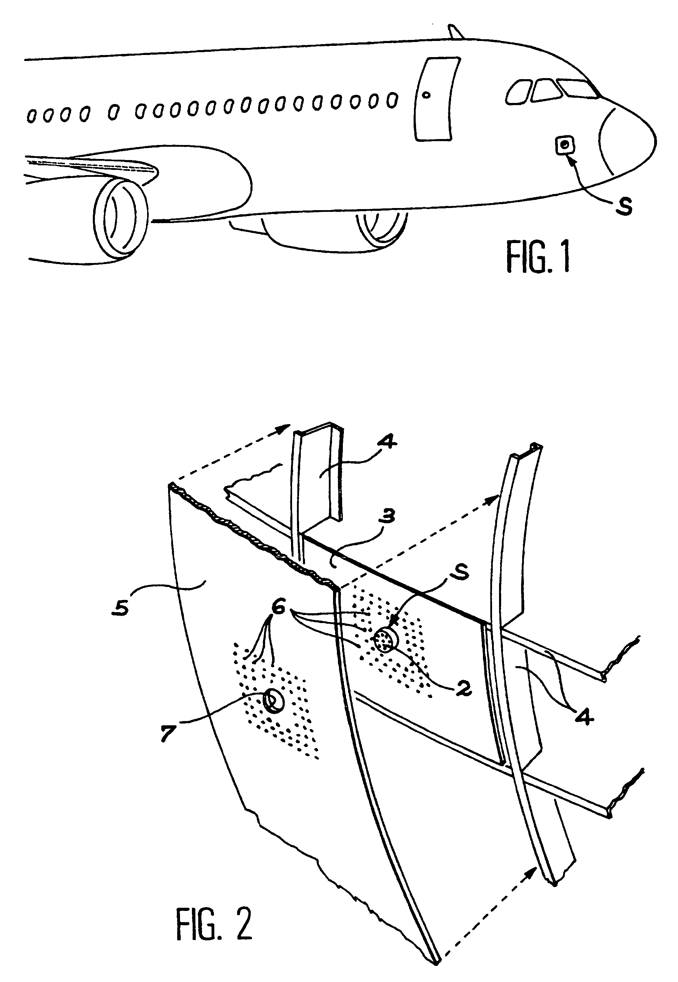

Par exemple, comme on l'a illustré schématiquement sur la figure 1 des figures annexées, qui représente en perspective l'avant d'un avion, l'une S des prises de pression, destinées à permettre la mesure de la pression statique, est située dans la partie avant du fuselage, sur le côté de celui-ci. Ce type de prise est généralement situé sur le fuselage, dans une zone d'écoulement aérodynamique peu perturbé.

Comme le montre plus en détail la figure 2 des dessins annexés, le dispositif de prise de pression S comprend une partie de prise de pression 2 qui se présente sous la forme d'un disque percé de trous, communément appelé "poivrière". Habituellement, le dispositif de prise de pression S est porté par un élément de renfort 3 que l'on fixe sur l'ossature 4 formant la structure de l'avion. On recouvre ensuite l'ossature 4 d'un panneau de fuselage 5, et on fixe ce panneau 5 sur l'ossature 4 et sur l'élément de renfort 3, généralement au moyen de rivets dont les trous de passage apparaissent en 6 sur la figure 2. La partie de prise de pression 2 est alors reçue dans une ouverture circulaire 7 formée dans le panneau de fuselage 5.

De façon générale, la qualité et la précision de la mesure de pression effectuée par une sonde (non représentée) raccordée sur le dispositif S de prise de pression se dégradent dès que l'écoulement aérodynamique de l'air sur le fuselage de l'aéronef est perturbé au voisinage de la partie de prise de pression 2. Pour cette raison, il est essentiel que la partie de prise de pression 2 du dispositif S affleure avec une grande précision la surface extérieure du panneau de fuselage 5 dans lequel ce dispositif est intégrée. Dans l'agencement classique illustré sur la figure 2, ce résultat nécessite une opération d'arasement de la partie de prise de pression 2, jusqu'à ce que les surfaces extérieures de ladite partie de prise de pression et du panneau de fuselage soient parfaitement alignées.

Cette technique classique pose un certain nombre de problèmes.

Tout d'abord, l'usinage d'une petite ouverture circulaire 7 dans le panneau de fuselage 5 engendre une déformée et donc des contraintes importantes dans ce panneau. Le nombre important et la pose de rivets utilisés pour fixer le panneau 5 sur l'élément de renfort 3 accentuent cette déformée. De plus, les têtes des rivets situés à proximité immédiate de la partie de prise de pression 2 du dispositif S contribuent à perturber localement l'écoulement aérodynamique. Il en résulte des erreurs de mesure et donc une perte de précision de la sonde.

Par ailleurs, l'opération d'arasement effectuée après le montage du dispositif S est une opération lourde industriellement. En effet, les tolérances étant très faibles, cette opération demande beaucoup de précision et donc beaucoup de temps. Si elle est mal effectuée, la sonde délivrera des mesures erronées, ce qui n'est pas acceptable comme on l'a déjà indiqué.

Un autre inconvénient de la technique d'implantation du dispositif S utilisée actuellement apparaît lors de l'endommagement de celui-ci en cas de choc. Il faut alors remplacer la partie de prise de pression 2 et recommencer l'opération d'arasement. Le remplacement est donc long et difficile.

Dans l'hypothèse où le panneau de fuselage serait légèrement endommagé à proximité du dispositif S, il n'est pas rentable de le remplacer. Toutefois, une simple rayure sur le panneau modifie l'écoulement aérodynamique local et fausse la mesure. Un polissage extrêmement précis est alors effectué. Il s'agit là encore d'une opération industriellement lourde et délicate à mettre en oeuvre.

Enfin, il est à noter que l'évolution des normes régulant le trafic aérien tend à diminuer l'écart d'altitude entre les couloirs utilisés par les avions, afin d'augmenter la densité du trafic. Une connaissance de plus en plus précise de l'altitude à laquelle évolue l'avion est donc indispensable. Cela se traduit par une exigence de marge d'erreur globale très faible en ce qui concerne les mesures de pression effectuées par les sondes de pression statique qui équipent les aéronefs. Cette évolution rend de plus en plus délicate l'utilisation des dispositifs de prise de pression statique existants.

### Exposé de l'invention

L'invention a précisément pour objet un dispositif de prise de pression pour aéronef, dont la conception originale améliore sensiblement la qualité des mesures effectuées par la sonde, tout en rendant plus simple et plus rapide son implantation sur le panneau de fuselage, ainsi que son remplacement éventuel.

Conformément à l'invention, ce résultat est obtenu au moyen d'un dispositif de prise de pression pour aéronef, comprenant au moins un élément de renfort, une partie de prise de pression portée par l'élément de renfort et tournée vers l'extérieur de l'aéronef, et un panneau de fuselage fixé sur l'élément de renfort et muni d'une ouverture dans laquelle est reçue la partie de prise de pression, dispositif caractérisé en ce qu'il comprend de plus une plaque dans laquelle est intégrée, sans discontinuité, la partie de prise de pression, ladite plaque étant fixée sur l'élément de renfort et l'ouverture présentant une forme et des dimensions sensiblement identiques à celles de la plaque, de telle sorte que celle-ci est reçue dans ladite ouverture et affleure la surface extérieure du panneau de fuselage.

Du fait que la partie de prise de pression est intégrée, sans discontinuité, à une plaque de relativement grandes dimensions, la continuité du profil aérodynamique du fuselage est assurée dans la zone de mesure entourant la partie de prise de pression, sans qu'aucun usinage soit nécessaire. De plus, il devient possible de fixer cette plaque sur l'élément de renfort depuis l'extérieur de l'aéronef, dans une ouverture du panneau de fuselage, dont la forme et les dimensions sont adaptées à celles de la plaque. Ce mode de fixation permet d'ajuster aisément la plaque de façon telle que sa surface extérieure affleure la surface extérieure du panneau de fuselage sans nécessiter d'opération d'arasement. En effet, la tolérance d'affleurement est beaucoup moins stricte à la périphérie de la plaque que dans la zone de mesure. On réalise ainsi un montage plus simple et plus rapide. De plus, le remplacement d'une partie de prise de pression éventuellement endommagée à la suite d'un choc est également plus simple et plus rapide.

Par ailleurs, du fait que cette technique permet de garantir la continuité de la surface extérieure du fuselage de l'aéronef dans la zone de mesure située à proximité de la partie de prise de pression, la qualité et la précision de la mesure sont naturellement améliorées.

De surcroît, il peut être remédié à un léger endommagement de la plaque intégrant la partie de prise de pression, tel qu'une rayure, en remplaçant simplement cette plaque. Si l'endommagement se produit sur le panneau de fuselage, le défaut est suffisamment éloigné de la partie de prise de pression pour ne pas engendrer de perturbations de la mesure.

Pour permettre d'ajuster la plaque par rapport au panneau de fuselage, lors de la fixation de ladite plaque sur l'élément de renfort, on utilise avantageusement des cales d'épaisseur. Cela permet d'assurer sans difficulté un affleurement précis des surfaces extérieures de la plaque et du panneau de fuselage.

L'élément de renfort comporte un évidement en regard de l'ouverture formée dans le panneau de fuselage, et la plaque est encastrée dans cet évidement. Pour faciliter la mise en place de la plaque, l'évidement comporte avantageusement un fond plan, contre lequel est appliquée une face plane de ladite plaque.

Dans un mode de réalisation préféré de l'invention, la partie de prise de pression est constituée par une région centrale de la plaque, traversée par des perforations.

La plaque est alors avantageusement fixée sur l'élément de renfort par des organes de fixation, tels que, des vis ou des boulons, qui sont tous disposés à la périphérie de la plaque. Les organes de fixation se trouvent ainsi éloignés de la zone de mesure située à proximité de la partie de prise de pression. Cela contribue à garantir la qualité et la précision de la mesure effectuée par la sonde.

Pour la même raison, les organes de fixation sont disposés de préférence en dehors d'une zone angulaire d'écoulement d'air centrée sur ladite partie de prise de pression. Cette zone angulaire d'écoulement d'air dépourvue d'organes de fixation forme avantageusement un angle d'au moins environ 30° qui coïncide avec la surface de la plaque le long de laquelle s'écoule l'air cheminant devant la partie de prise de pression.

L'invention concerne également un procédé d'implantation d'un dispositif de prise de pression sur un panneau de fuselage d'un aéronef, selon lequel on fixe le panneau de fuselage sur un élément de renfort, de telle sorte qu'une partie de prise de pression soit reçue dans une ouverture formée dans ledit panneau, le procédé étant caractérisé en ce que l'on intègre, sans discontinuité, la partie de prise de pression à une plaque de forme et de dimensions sensiblement identiques à celles de ladite ouverture et en ce que l'on fixe ladite plaque sur l'élément de renfort après avoir fixé le panneau de fuselage sur l'élément de renfort, de telle sorte que la plaque soit reçue dans ladite ouverture et affleure la surface extérieure du fuselage.

### Brève description des dessins

On décrira à présent, à titre d'exemple non limitatif, un mode de réalisation préféré de l'invention, en se référant aux dessins annexés, dans lesquels :
- la figure 1, déjà décrite, est une vue en perspective qui représente très schématiquement la partie avant du fuselage d'un avion ;
- la figure 2, déjà décrite, est une vue en perspective éclatée illustrant schématiquement l'implantation d'un dispositif de prise de pression sur un panneau de fuselage avant de l'avion de la figure 1, selon l'art antérieur ;
- la figure 3 est une vue en perspective illustrant schématiquement l'implantation d'un dispositif de prise de pression sur un panneau de fuselage d'un aéronef, conformément à l'invention ;
- la figure 4 est une vue de face d'un dispositif de prise de pression conforme à l'invention ; et
- la figure 5 est une vue en coupe selon la ligne V-V de la figure 4.

### Description détaillée d'un mode de réalisation préféré de l'invention

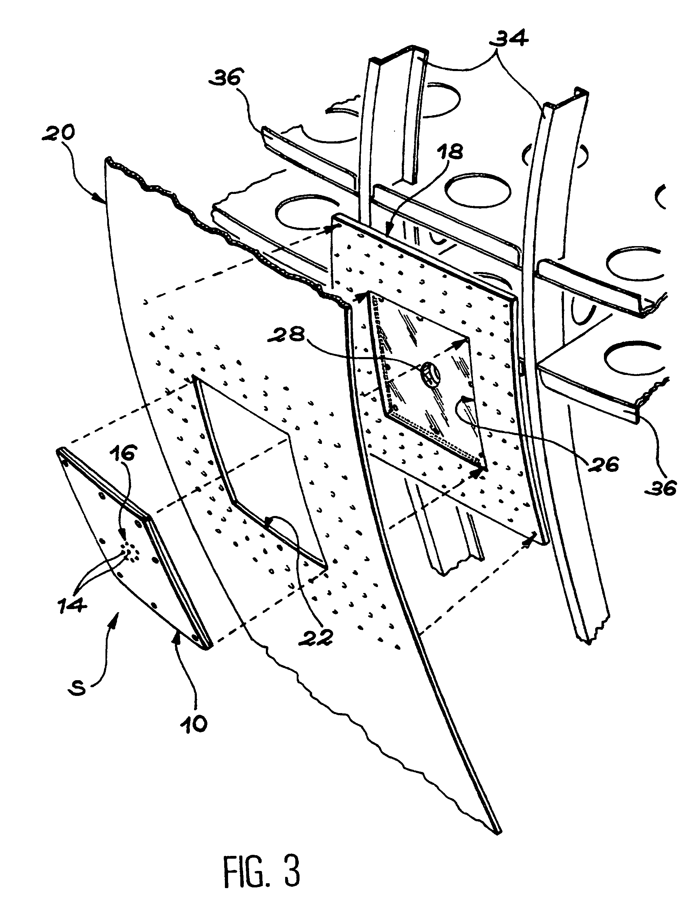

Comme on l'a représenté de façon schématique sur la figure 3, le dispositif de prise de pression conforme à l'invention comprend une plaque 10 dont la surface extérieure est destinée à former une petite partie de la surface extérieure du fuselage de l'aéronef. Une région centrale de la plaque 10, traversée par des perforations 14, constitue la partie de prise de pression 16 d'une sonde de mesure de pression statique (non représentée). La plaque 10 et la partie de prise de pression 16 de la sonde forment ainsi un sous ensemble dont l'implantation sur le fuselage de l'aéronef sera décrit ultérieurement. Il est à noter que la partie de prise de pression 16 de la sonde est intégrée sur la plaque 10 de façon telle que la surface extérieure de celle-ci ne présente aucune discontinuité autre que les perforations 14.

Le dispositif de mesure de pression conforme à l'invention comprend de plus un élément de renfort 18, prévu pour être fixé à la structure de l'aéronef, d'une manière qui sera précisée ultérieurement à titre d'exemple.

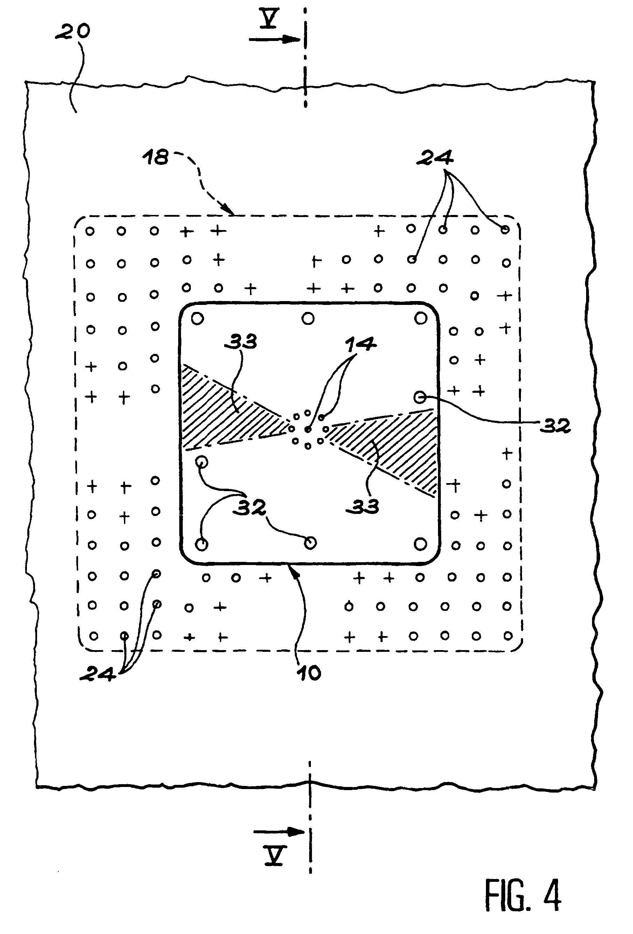

Enfin, le dispositif de mesure de pression selon l'invention comprend un panneau de fuselage 20, également prévu pour être fixé à la structure de l'aéronef. Ce panneau de fuselage 20 comporte une ouverture ou fenêtre 22, intégralement située en face de l'élément de renfort 18. Plus précisément, la forme et les dimensions de l'ouverture 22 sont sensiblement identiques à celles de la plaque 10 (aux jeux d'assemblage près) et les parties du panneau 20 qui entourent cette ouverture 22 prennent appui sur l'élément de renfort 18, de façon à pouvoir être fixées à celui-ci par des organes de fixation 24 tels que des rivets, des vis ou des boulons, comme l'illustre la figure 4. Une fixation du panneau 20 par collage peut aussi être envisagée, sans sortir du cadre de l'invention.

Le sous ensemble constitué par la plaque 10 et la partie de prise de pression 16 est implanté sur le panneau de fuselage 20 depuis l'extérieur de l'avion, après que le panneau 20 ait été lui-même monté et fixé sur l'élément de renfort 18 par les organes de fixation 24. Plus précisément, la plaque 10 vient se loger dans l'ouverture 22 ainsi que dans un évidement 26 formé en face de l'ouverture 22 sur la face de l'élément de renfort 18 tournée vers l'extérieur. Le fond de l'évidement 26 est avantageusement plan, de même que la face arrière de la plaque 10, qui vient en appui contre ledit fond.

Un trou 28 est formé au centre de l'élément de renfort 18, dans le fond de l'évidement 26 et en face de la partie de prise de pression 16. Un flexible 27 est raccordé sur ce trou 28, à l'arrière de l'élément de renfort 18, pour relier la partie de prise de pression 16 à la sonde (non représentée). Un dispositif de dégivrage 29 entoure le flexible 27, à l'arrière de l'élément de renfort 18.

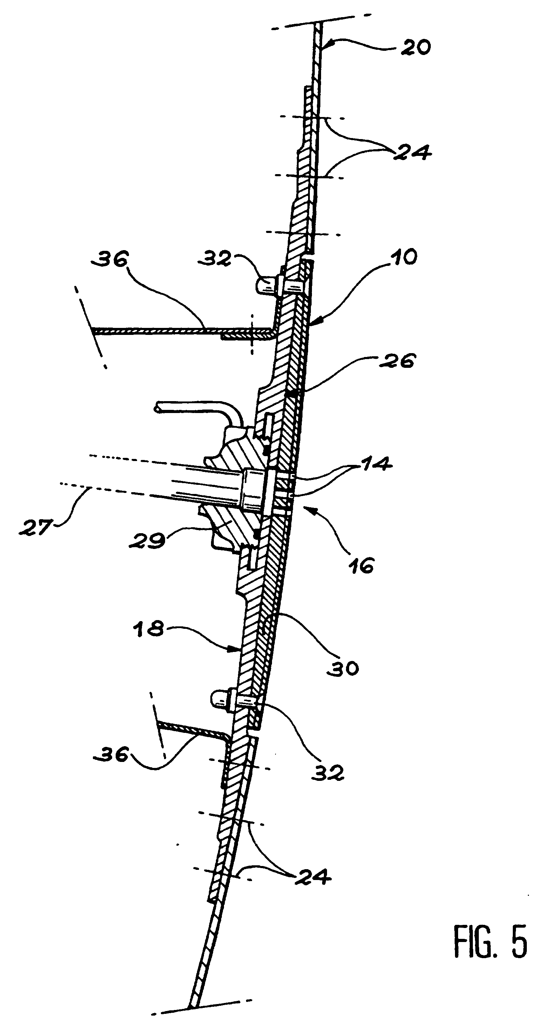

Lors de la mise en place de l'ensemble formé par la plaque 10 et la partie de prise de pression 16, des cales d'épaisseur 30 (figure 5) sont avantageusement interposées entre la plaque 10 et l'élément de renfort 18, dans le fond de l'évidement 26, afin que la surface extérieure de la plaque 10 affleure précisément et sans discontinuité la surface extérieure du panneau de fuselage 20. Les cales 30 peuvent notamment être des cales pelables de 0,05 mm par feuille. L'agencement obtenu est tel que les surfaces extérieures de la plaque 10 et du panneau 20 soient parfaitement alignées sur toute la périphérie de la plaque. Il est à noter, toutefois, que la distance séparant le bord périphérique de la plaque 10 de la partie de prise de pression 16 est suffisante pour que l'influence d'un éventuel léger défaut d'alignement soit pratiquement sans influence sur la précision de la mesure. C'est pourquoi un arasement n'est pas nécessaire.

La plaque 10 est généralement fixée sur l'élément de renfort 18 par des organes de fixation 32 tels que des vis ou des boulons. Comme le montre en particulier la figure 4, ces organes de fixation 32 sont tous disposés à la périphérie de la plaque 10, c'est-à-dire en un emplacement aussi éloigné que possible des perforations 14 formant la partie de prise de pression 16 de la sonde.

En outre, comme l'illustre également la figure 4, les organes de fixation 32 sont placés en dehors d'une zone angulaire d'écoulement d'air 33 centrée sur la partie de prise de pression 16 de la sonde. Cette zone angulaire 33 est matérialisée par des hachures sur la figure 4. Elle forme avantageusement un angle d'au moins environ 30°. La zone angulaire 33 dépourvue d'organes de fixation 32 est centrée sur une ligne passant par le centre de la partie de prise de pression 16 et inclinée vers le haut d'avant en arrière.

Dans une variante de réalisation non représentée, les organes de fixation 32 sont supprimés et la plaque 10 est collée sur l'élément de renfort 18. L'ensemble des caractéristiques qui viennent d'être décrites permettent d'assurer que l'air qui s'écoule devant les perforations 14 assurant la prise de pression de la sonde ne subisse pratiquement aucune perturbation dans son écoulement aérodynamique à proximité de la partie de prise de pression. Par conséquent, une qualité et une précision de mesure sensiblement supérieures à celles obtenues à l'aide des dispositifs de mesure existants sont assurées.

Il est à noter en outre que ces caractéristiques sont obtenues sans qu'il soit nécessaire d'avoir recours à des opérations d'arasement longues et complexes à mettre en oeuvre.

Il est à noter également que l'agencement qui vient d'être décrit permet, le cas échéant, de remplacer la partie de prise de pression et la plaque qui la supporte de façon rapide et simple, depuis l'extérieur de l'aéronef.

Dans le mode de réalisation illustré sur les figures 3 à 5, la plaque 10 et l'ouverture 22 présentent des contours rectangulaires. On comprendra cependant que des contours de formes différentes (circulaires, ovales, trapézoïdales, etc.) peuvent être utilisés sans sortir du cadre de l'invention.

Comme l'illustrent les figures 3 à 5, la structure de l'aéronef sur laquelle sont fixés l'élément de renfort 18 et le panneau de fuselage 20 se présente habituellement, de manière connue, sous la forme d'une ossature formée de cadres circulaires 34 disposés dans des plans transversaux de l'aéronef et de cornières longitudinales 36 s'étendant dans le sens longitudinal de l'avion. Le dispositif de prise de pression S est intégré dans l'une des mailles délimitée entre deux cadres 34 adjacents et entre deux cornières 36 consécutives. Comme l'illustrent les figures, l'élément de renfort 18 est fixé à ces cadres 34 et cornières 36 par certains des organes de fixation 24 servant par ailleurs à fixer le panneau de fuselage 20 aux différents éléments de l'ossature.

Bien entendu, l'invention n'est pas limitée au mode de réalisation qui vient d'être décrit à titre d'exemple, mais en couvre toutes les variantes. On comprendra notamment que la nature des organes de fixation 24 et 32, leur nombre et leur emplacement peuvent être différents de ceux qui sont illustrés sur la figure 4, sans sortir du cadre de l'invention. Par ailleurs, le jeu fonctionnel qui existe inévitablement entre le bord périphérique de la plaque 10 et le contour de l'ouverture 22 peut être comblé par un mastic de remplissage ou tout produit équivalent. En outre et comme on l'a déjà observé, l'élément de renfort 18 peut être constitué d'une pièce unique, comme on l'a représenté sur les figures, ou de plusieurs pièces aptes à reprendre l'intégralité des efforts découlant de la présence de l'ouverture 22 dans le panneau 20. De plus, le panneau de fuselage 20 peut être fixé sur l'élément de renfort 18 soit en étant rapporté sur celui-ci par des moyens d'assemblage quelconques appropriés, soit en étant réalisé d'un seul tenant avec ledit élément de renfort, par exemple dans le cas d'un panneau en matériau composite ou d'un panneau métallique en usinage intégral. Enfin, on comprendra que l'invention s'applique à la réalisation de tout dispositif de prise de pression d'aéronef, quel que soit son emplacement sur le fuselage.

## Revendications

1. Dispositif de prise de pression pour aéronef, comprenant au moins un élément de renfort (18), une partie de prise de pression (16) portée par l'élément de renfort et tournée vers l'extérieur de l'aéronef, et un panneau de fuselage (20) fixé sur l'élément de renfort (18) et muni d'une ouverture (22) dans laquelle est reçue la partie de prise de pression (16), dispositif **caractérisé en ce qu'**il comprend de plus une plaque (10) dans laquelle est intégrée, sans discontinuité, la partie de prise de pression (16), ladite plaque étant fixée sur l'élément de renfort (18) et l'ouverture (22) présentant une forme et des dimensions sensiblement identiques à celles de la plaque, de telle sorte que celle-ci est reçue dans ladite ouverture et affleure la surface extérieure du panneau de fuselage (20).

2. Dispositif selon la revendication 1, dans lequel des cales d'épaisseur (30) sont interposées entre ladite plaque (10) et l'élément de renfort (18).

3. Dispositif selon l'une quelconque des revendications 1 et 2, dans lequel l'élément de renfort (18) comporte un évidement (26) en regard de ladite ouverture (22), dans lequel est encastrée ladite plaque (10).

4. Dispositif selon la revendication 3, dans lequel l'évidement (26) comporte un fond plan, contre lequel est appliquée une face plane de ladite plaque (10).

5. Dispositif selon l'une quelconque des revendications 1 à 4, dans lequel la partie de prise de pression (16) est constituée par une région centrale de ladite plaque (10), traversée par des perforations (14).

6. Dispositif selon l'une quelconque des revendications 1 à 5, dans lequel la plaque (10) est fixée sur l'élément de renfort (18) par des organes de fixation (32) tous disposés à la périphérie de ladite plaque.

7. Dispositif selon la revendication 6, dans lequel les organes de fixation (32) sont disposés en dehors d'une zone angulaire d'écoulement d'air (33) centrée sur ladite partie de prise de pression (16).

8. Dispositif selon la revendication 7, dans lequel la zone angulaire d'écoulement d'air (33) dépourvue d'organes de fixation (32) forme un angle d'au moins environ 30°.

9. Procédé d'implantation d'un dispositif de prise de pression sur un panneau de fuselage (20) d'un aéronef, selon lequel on fixe le panneau de fuselage (20) sur un élément de renfort (18), de telle sorte qu'une partie de prise de pression (16) soit reçue dans une ouverture (22) formée dans ledit panneau, le procédé étant **caractérisé en ce que** l'on intègre, sans discontinuité, la partie de prise de pression (16) à une plaque (10) de forme et de dimensions sensiblement identiques à celles de ladite ouverture (22) et **en ce que** l'on fixe ladite plaque sur l'élément de renfort (18) après avoir fixé le panneau de fuselage (20) sur l'élément de renfort (18), de telle sorte que la plaque soit reçue dans ladite ouverture (22) et affleure la surface extérieure du fuselage.

10. Procédé selon la revendication 9, dans lequel on fixe ladite plaque (10) sur l'élément de renfort (18) en interposant des cales d'épaisseur (30) afin d'aligner la surface extérieure de la plaque sur celle du fuselage.

11. Procédé selon l'une quelconque des revendications 9 et 10, dans lequel on fixe ladite plaque (10) sur l'élément de renfort (18) par des organes de fixation (32) tous disposés à la périphérie de la plaque.

12. Procédé selon la revendication 11, dans lequel on place les organes de fixation (32) en dehors d'une zone angulaire d'écoulement d'air (33) centrée sur la partie de prise de pression (16).

13. Procédé selon la revendication 12, dans lequel on place les organes de fixation (32) en dehors d'une zone angulaire d'écoulement d'air (33) formant un angle d'au moins environ 30°.

## Patentansprüche

1. Drucksensorvorrichtung für ein Luftfahrzeug mit mindestens einem Verstärkungselement (18), einem von dem Verstärkungselement getragenen und vom Luftfahrzeug nach außen gerichteten Drucksensorteil (16) und einer Rumpfplatte (20), die am Verstärkungselement (18) befestigt ist und mit einer Öffnung (22) versehen ist, in die das Drucksensorteil (16) aufgenommen ist, wobei die Vorrichtung **dadurch gekennzeichnet ist, dass** sie außerdem eine Platte (10) umfasst, in die das Drucksensorteil (16) ohne Diskontinuität integriert ist, wobei die Platte an dem Verstärkungselement (18) befestigt ist und die Öffnung (22) eine Form und Dimensionen aufweist, die im wesentlichen identisch mit denjenigen der Platte sind, so dass sie in die Öffnung aufgenommen ist und die Außenfläche der Rumpfplatte (20) berührt.

2. Vorrichtung nach Anspruch 1, wobei Unterlegplatten bwz. -keile (30) zwischen die Platte (10) und das Verstärkungselement (18) eingefügt sind.

3. Vorrichtung nach einem der Ansprüche 1 oder 2, wobei das Verstärkungselement (18) eine Ausnehmung (26) gegenüber der Öffnung (22) umfasst, in die die Platte (10) eingesetzt ist.

4. Vorrichtung nach Anspruch 3, wobei die Ausnehmung (26) einen ebenen Boden aufweist, an dem eine ebene Fläche der Platte (10) anliegt.

5. Vorrichtung nach einem der Ansprüche 1 bis 4, wobei das Drucksensorteil (16) aus einem Zentralbereich der Platte (10) gebildet ist, der von Perforationen (14) durchsetzt ist.

6. Vorrichtung nach einem der Ansprüche 1 bis 5, wobei die Platte (10) an dem Verstärkungselement (18) durch Befestigungselemente (32) befestigt ist, die alle am Umfang der Platte angeordnet sind.

7. Vorrichtung nach Anspruch 6, wobei Befestigungselemente (32) außerhalb einer abgewinkelten Luftströmungszone (33) angeordnet sind, welche auf das Drucksensorteil (16) zentriert ist.

8. Vorrichtung nach Anspruch 7, wobei die abgewinkelte Luftströmungszone (33), die keine Befestigungselemente (32) aufweist, einen Winkel von mindestens etwa 30 Grad bildet.

9. Verfahren zum Einbau einer Drucksensorvorrichtung an einer Rumpfplatte (20) eines Luftfahrzeugs, wobei die Rumpfplatte (20) an einem Verstärkungselement (18) derart befestigt wird, dass ein Drucksensorteil (16) in einer in der Platte ausgebildeten Öffnung (22) aufgenommen wird, wobei das Verfahren **dadurch gekennzeichnet ist, dass** das Drucksensorteil (16) ohne Diskontinuität in eine Platte (10) integriert wird, deren Form und Dimensionen im wesentlichen identisch mit denjenigen der Öffnung (22) sind, und **dadurch**, dass die Platte an dem Verstärkungselement (18) befestigt wird, nachdem die Rumpfplatte (20) an dem Verstärkungselement (18) derart befestigt worden ist, dass die Platte in die Öffnung (22) aufgenommen wird und die Außenfläche des Rumpfes bildet.

10. Verfahren nach Anspruch 9, wobei die Platte (10) an dem Verstärkungselement (18) befestigt wird, indem Unterlegplatten bzw. -keile (30) eingefügt werden, um die Außenfläche der Platte mit derjenigen des Rumpfes fluchten zu lassen.

11. Verfahren nach einem der Ansprüche 9 oder 10, wobei die Platte (10) am Verstärkungselement (18) durch Befestigungselemente (32) befestigt wird, die alle am Umfang der Platte angeordnet sind.

12. Verfahren nach Anspruch 11, wobei die Befestigungselemente (32) außerhalb einer abgewinkelten Luftströmungszone (33), die auf das Drucksensorteil (16) zentriert ist, angeordnet werden.

13. Verfahren nach Anspruch 12, wobei die Befestigungselemente (32) außerhalb einer abgewinkelten Luftströmungszone (33), die einen Winkel von mindestens etwa 30 Grad bildet, angeordnet werden.

## Claims

1. Pressure tapping device for an aircraft, comprising at least one support element (18), a pressure tapping part (16) carried by the support element and turned towards the outside of the aircraft, and a fuselage panel (20) fixed on the support element (18) and provided with an opening (22) which receives the pressure tapping part (16), said device **characterised in that** it also comprises a plate (10) in which is integrated, without discontinuity, the pressure tapping part (16), said plate being fixed on the support element (18) and the opening (22) having a shape and dimensions almost identical to those of the plate, in such a way that the latter is received in said opening and is flush with the external surface of the fuselage panel (20).

2. Device according to Claim 1, in which shims (30) are interposed between said plate (10) and the support element (18).

3. Device according to one or the other of Claims 1 and 2, in which the support element (18) comprises a recess (26) relative to said opening (22), in which said plate (10) is countersunk.

4. Device according to Claim 3, in which the recess (26) comprises a plane base, against which the plane face of said plate (10) is applied.

5. Device according to any one of claims 1 to 4, in which the pressure tapping part (16) is constituted with a central region of said plate (10), pierced by perforations (14).

6. Device according to any one of claims 1 to 5, in which the plate (10) is fixed on the support element (18) by fixation elements (32) all arranged around the periphery of said plate.

7. Device according to claim 6, in which the fixation elements (32) are arranged outside an angular zone of air flow (33) centred on said pressure tapping part (16).

8. Device according to claim 7, in which the angular zone for air flow (33) without fixation elements (32) forms an angle of at least about 30°.

9. Method for installing a pressure tapping device on a fuselage panel (20) of an aircraft, according to which the fuselage panel (20) is fixed on a support element (18), in such a way that a pressure tapping part (16) is received in an opening (22) formed in said panel, the method being **characterized in that**, without discontinuity, the pressure tapping part (16) is integrated with a plate (10) of shape and dimensions almost identical to those of said opening (22) and **in that** said plate is fixed on the support element (18) after having fixed the fuselage panel (20) on the support element (18), in such a way that the plate is received in said opening (22) and is flush with the external surface of the fuselage.

10. Method according to claim 9, in which said plate (10) is fixed on the support element (18) by interposing shims (30) in order to align the external surface of the plate along that of the fuselage.

11. Method according to either of claims 9 and 10, in which said plate (10) is fixed in the support element (18) by fixation elements (32) all arranged around the periphery of the plate.

12. Method according to claim 11, in which the fixation elements (32) are placed outside an angular zone of air flow (33) centred on the pressure tapping part.

13. Method according to claim 12, in which the fixation elements (32) are placed outside an angular zone of air flow (33) forming an angle of at least about 30°.
